(19) **Europäisches Patentamt European Patent Office Office européen des brevets**

(11) **EP 1 303 837 B1**

(12) **EUROPEAN PATENT SPECIFICATION**

(45) Date of publication and mention
of the grant of the patent:
**26.08.2009 Bulletin 2009/35**

(51) Int Cl.:
***G06T 1/00*** (2006.01)

(21) Application number: **00945910.8**

(86) International application number:
**PCT/EP2000/006631**

(22) Date of filing: **12.07.2000**

(87) International publication number:
**WO 2002/005210 (17.01.2002 Gazette 2002/03)**

(54) **WATERMARKED DIGITAL IMAGES**

WASSERGEZEICHNETE DIGITALE BILDER

IMAGES NUMERIQUES FILIGRANEES

(84) Designated Contracting States:
**AT BE CH CY DE DK ES FI FR GB GR IE IT LI LU MC NL PT SE**

(43) Date of publication of application:
**23.04.2003 Bulletin 2003/17**

(73) Proprietor: **Motorola Limited Basingstoke, Hampshire RG22 4PD (GB)**

(72) Inventors:
• **HOBSON, Paola, Marcella Hampshire, GU34 2SQ (GB)**
• **TAY, Lai, Hock London SW7 4ND (GB)**

(74) Representative: **Gibson, Sarah Jane et al Boult Wade Tennant Verulam Gardens 70 Gray's Inn Road London WC1X 8BT (GB)**

(56) References cited:
• **FRIDRICH J: "ROBUST BIT EXTRACTION FROM IMAGES" PROCEEDINGS OF THE INTERNATIONAL CONFERENCE ON MULTIMEDIA COMPUTING AND SYSTEMS, June 1999 (1999-06), XP000939253**
• **KUNDUR D ET AL: "ATTACK CHARACTERIZATION FOR EFFECTIVE WATERMARKING" KOBE, JAPAN, OCT. 24 - 28, 1999,LOS ALAMITOS, CA: IEEE,US, October 1999 (1999-10), pages 240-244, XP000939230 ISBN: 0-7803-5468-0**
• **RUANAIDH J J K O ET AL: "PHASE WATERMARKING OF DIGITAL IMAGES" PROCEEDINGS OF THE INTERNATIONAL CONFERENCE ON IMAGE PROCESSING (ICIP), US,NEW YORK, IEEE, 16 September 1996 (1996-09-16), pages 239-242, XP000199952 ISBN: 0-7803-3259-8**

**Description**

<u>Field of the Invention</u>

This invention relates to watermarked digital images. In particular, it relates to methods for improving confidence in and for authentication of watermarked digital images.

In order to increase confidence of use of digital images as evidence, possibly in a court of law, there is a significant need to demonstrate that an image has not been tampered with.

<u>Background to the Invention</u>

It is known to use audit trails, in which information about when an image was processed is appended to the image, but these methods are only applicable once an image has been registered onto a system. Such audit trails therefore cannot detect any unauthorised operations prior to registration on a computer, and may not be able to report on the type of processing done at any one time. Audit trails can also be avoided or corrupted, whether deliberately or accidentally.

Image watermarking is a known technique. In this technique, a known binary pattern or signature is embedded into an image at the moment of image acquisition. Such watermarks are called "robust" because they are designed to remain intact regardless of any post-processing of the image such as filtering, cropping etc. While such watermarks do provide a useful degree of protection, they can at present not be wholly relied on and they cannot always possess the required degree of surety that an image has not been tampered with in order for the image to be used as evidence under the strict rules of courts of law, etc.

Ruanaidh, Dowling and Boland "Phase Watermarking of Digital Images", IEEE INTCONF Image Processing, Vol. 3, Lausanne, Switzerland, September 1996, pp 239 to 242, describes a technique for watermarking digital images in which an image is divided into blocks of a selected size (e.g. 16 x 16 pixels). A discrete Fourier transform (DFT) is applied to the luminance component of the image on a block by block basis. The DFT is a complex value and thereby generates a modulus and a phase. The resulting watermark comprises a binary string of 1's and 0's which may represent, for example, a company logo, a user authentication code, date/time/location information and so on. The watermark is embedded in the image by altering the phase of selected DFT coefficients.

An article entitled 'Attack Characterization for Effective Watermarking' by Deepa Kundur and Dimitrios Hatzinakos, International Conference on Image Processing, ICIP'99, Kobe, Japan 24-28 Oct. 1999, pages 240-244 discloses a watermarking scheme in which two watermarks (a robust watermark and a reference watermark) are embedded in an image in order to provide for recovery of the robust watermark in the event of an attack on the image. The reference watermark (is known by the receiving device) and is used to characterise an attack before the robust watermark is recovered thereby enabling the robust watermark to be more accurately decoded.

The present invention arose in an attempt to provide an improved method of authenticating, and thereby improve confidence in, a watermarked image.

<u>Brief Summary of the Invention</u>

According to the present invention there is provided a tamper detection method for digital images as recited in claim 1 of the accompanying claims.

Preferably, a discrete Fourier transform is applied to the image on a block by block basis, and the watermark is applied to each one of a selected number of DFT coefficients within a block by selecting the phase of that DFT coefficient to be equal to the phase of one or other of a plurality of phase values, of a set of quantised phase values, which are closest to the actual phase dependent upon the value with which the watermarked bit is to be embedded, and wherein during recovery of the watermark, a discrete Fourier transform is again taken of each block and the watermark is recovered by determining which of the quantised set of levels the recovered bit phase data is closest to.

A confidence measure for each bit n of recovered phase $P_n$ may be defined as

$$C_n = 1 - (2 * |P_x - P_n| / |P_x - P_y|)$$

where $P_n$ is the recovered phase for bit n of the watermark, $\|$ denotes modulus, and $P_x$, $P_y$ are the nearest reference phase levels, where $P_x$ was chosen as the closest phase level.

Alternatively, the digital watermarking is done on blocks of the image of a predetermined size; wherein an amplitude value is added to, or from, an amplitude relating to each one of a number of selected pixels of the block, depending upon whether the value with which the watermarked bit is to be embedded, and wherein during recovery of the watermark, an estimate of the actual value is made, and wherein each confidence value is related to how close the recovered amplitude is to one or more of a quantised set of reference amplitude levels. The confidence measure $C_n$ of each bit n may then be defined as

$$C_n = 1 - (2 * |A_x - A_n| / |A_x - A_y|)$$

wherein $A_n$ is the recovered amplitude for bit n of the watermark, $\|$ denotes modulus, and $A_x$, $A_y$ are the nearest reference amplitude levels, where $A_x$ was chosen as the closest.

The watermark is preferably a binary code (i.e. the value can be 0 or 1) or may be other codes, in which each bit could be embedded with any of three, four or more values for example. This coding may be useful in the spatial domain but can also be used in the transform domain.

Brief Description of the Drawings

Embodiments of the invention will now be described, by way of example only, with reference to the accompanying drawings, in which:

Figure 1 shows the DFT of a block forming part of an image;
Figure 2 shows phase quantisation levels for forming a watermark;
Figure 3 shows a phase diagram on subsequent stage of verifying the watermark;
Figure 4 shows confidence values across part of an image;
Figure 5 shows variations in confidence value depending upon the bit position;
Figure 6 is a plot of confidence values and DFT magnitude variance values;
Figure 7 is a plot of confidence values for different JPEG compression regimes; and
Figure 8 shows the effect on confidence of cutting and pasting part of an image.

Detailed Description of Embodiments of the Invention

Embodiments of the invention will be described which use phase modulation types of image watermarking. However, it should be appreciated that the concepts of the present invention may be equally applied with other types of image processing, and particularly in the spatial domain in addition to the frequency or phase domain.

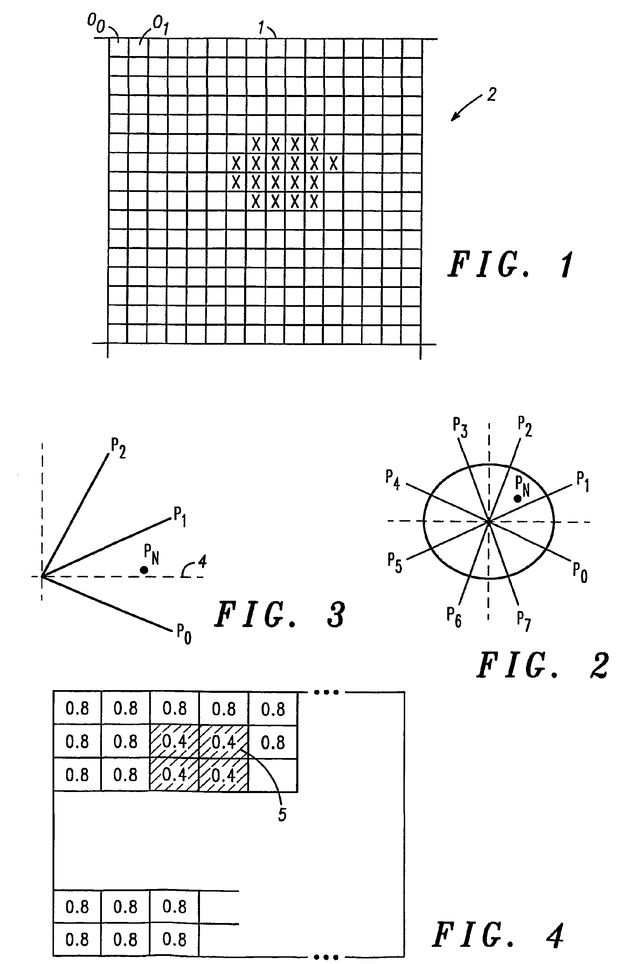

In a method in line with that used by Ruanaidh et al, an image is divided into blocks of desired size. These may be, for example, 16 x 16 pixels. A discrete Fourier transform (DFT) is applied to the luminance component of the image on a block by block basis. The DFT generates a modulus and a phase. Figure 1 shows one 16x16 pixel block 1 forming part of an image 2. The watermark is a binary string of 1's and 0's which may represent possibly a company logo, a user authentication code, some date/time/location information, etc. The watermark is embedded into the block 1 by altering the phase of selected DFT coefficients. The DFT coefficients selected are shown purely schematically as X's in some of the coefficients in block 1 of Figure 1. In some embodiments, 52 such elements are used (less than these are shown in the Figure for clarity). The number 52 is chosen for minimal visibility in the image but other numbers may be used as desired. The phase of the coefficient to be used is quantised to one of a set of values as shown in Figure 2. Whilst any number of phase levels $P_o$ to $P_n$ may be used, for an appropriate trade off between visibility and ease of recovery, it has been found desirable to use eight phase levels, $P_0$ to $P_7$. The phase of any one particular coefficient $P_n$ will be modified so that it takes on one of the quantised values $\{P_0 ... P_7\}$. In order to have a binary code, the scheme is chosen such that if the watermark bit to be embedded is a 1, then the nearest phase from the set of even phases $\{P_0, P_2, P_4, P_6\}$ is chosen to replace the value $P_n$. If the watermark bit to be embedded is a 0, then the nearest set from the set of odd phases $\{P_1, P_3, P_5, P_7\}$ is chosen to replace the value $P_n$.

At the receiving end, in order to recover the watermark, the DFT is taken of each 16 x 16 block and the phase of the 52 watermarked bits examined. If the recovered phase is closest to one of the set $\{P_0, P_2, P_4, P_6\}$, then a 1 is detected. If the recovered phase is closest to one of the set $\{P_1, P_3, P_5, P_7\}$, then a 0 is detected.

After watermarking, the image may undergo a series of legitimate operations such as non-linear filtering, JPEG compression etc, which may alter the phase such that the phase of the received image is no longer that determined by the quantisation process of Figure 2. The receiver must then choose the nearest quantisation level. Figure 3 shows a bit of received phase $P_n$. Note that the figure only shows three of the quantised phase levels for clarity. Clearly, the original phase must have been one of $P_0 ... P_7$. Since $P_n$ is closest to $P_1$, then the bit is considered to be a 0.

The detection method outlined with reference to Figure 3 is based on the assumption that any legitimate intermediate processing will not alter the phase such that it goes beyond the point where it could be correctly recovered. Referring to the figure, this implies that if the phase $P_n$ is significantly altered by intermediate processing such that it falls below the dashed line 4 for example, then a 1 will be detected instead of a 0 because the phase is closer to Po than $P_1$.

To improve recovery of the watermark, the mark may be repeated in each of the 16 x 16 blocks of the image. Thus, for a QCIF image (176 x 144 pixels) there will be up to 99 repeats of the watermark (in practice not all blocks are watermarked to reduce visibility). Thus, an average over all the blocks can be taken to give the recovered watermark. However, information within each received block can be used in order to provide more information about what has happened to that block since the image was watermarked.

In embodiments of the invention, a confidence measure Cn for recovered phase Pn is defined as

$$C_n = 1 - (2 * |P_x - P_n| / |P_x - P_y|)$$

where $P_n$ is the recovered phase for bit n of the watermark, $\|$ denotes modulus, and $P_x$, $P_y$ are the nearest reference phase levels, where $P_x$ was chosen as the closest. In the example shown in Figure 3, $P_x = P_1$, and $P_y = P_o$.

Thus, if phase $P_n$ was equal to $P_1$, a 0 would be detected as the watermark bit with confidence 1. If it falls midway between $P_0$ and $P_1$ (i.e. on the dashed line 4 of Figure 3) then one would not know whether it should be a 1 or a 0 so the confidence of decision becomes 0.

Most legitimate processes tend to operate over the whole of an image. Thus, if the confidence measure for bit n of the watermark embedded in 16 x 16 block K of the image is measured, one would expect it to be the same as for bit n of the watermark embodied in any other 16 x 16 block of the image. If the confidence measure $C_n$ is the same for bit n in each block, then it is highly unlikely that the image has been tampered with. The possibility that tampering has occurred may be detected, therefore, by examining the confidence measure for bit n across the whole image and in Figure 4 the confidence measure for some bits n are shown. In the figure, the confidence of recovery of bit n of the watermark is found to be about 0.8 for most of the pixels in the image (only a few have been shown), but a small area 5, which is shown hatched, shows a confidence of 0.4. The user may therefore suspect that an operation was performed in this area which was not carried out on the rest of the picture. Examples of such tampering which would impact confidence are cutting and pasting where the inserted area may or may not have its own watermark embedded, frequency domain filtering using off-the-shelf image manipulation packages and other types of processing.

Accordingly, suspicion would be thrown upon this particular image and upon its authenticity.

An alternative method is to compute the confidence per block as an average across the whole watermark and to compare this with the average confidence measure in each of the other blocks throughout the image. A significant difference in the confidence measure for a block compared with the rest of the image might indicate tampering. This variation tends to overcome problems which may occur with a localised change to the confidence measure of one bit of the watermark within a block due to random noise or other random effects.

It is described above how in some embodiments not all blocks of the image may be watermarked. When determining the confidence of the image, one would expect those areas which have been watermarked to have a higher confidence measure and therefore higher confidence level, than those which have not been watermarked. Thus, in a modification and to improve security, only selected area are watermarked and the receiving party needs to be made aware which areas those are. This can be done by a key method. Since the receiver then knows those areas of the image which are watermarked, he will expect to see higher confidence measures in those area. This represents an additional level of security since a "hacker" may know that watermarks and confidence levels are being detected, but will then be unlikely to know which particular blocks he should concentrate on.

It is possible to combine the methods of the present invention with a bit error rate (BER) measurement of the recovered watermark per block, with respect to the original watermark (if known), for example. By using a BER alongside the confidence measure, security and confidence can be increased. A BER can be used on its own, but fails to detect certain types of tampering.

When the invention is used in the spatial domain, then amplitudes may be used instead of phases by adding to, or subtracting from the luminance value of selected pixels, an amplitude value (e.g. 2) depending on whether the bit is to be a 1 or 0 (i.e. adding a value if it is to be 1, subtracting if it is to be 0). At recovery, an estimate of the original value is made and then a confidence measurement is made by determining how close the actual value is to be either of the two values expected. So, if the recovered value $A_n$ lies between expected values $A_x$ and $A_y$, but closer to $A_x$ than the confidence measure is defined as follows:

$$C_n = 1 - (2 * |A_x - A_n| / |A_x - A_y|)$$

Note that instead of a binary code, a different code may be embedded as a watermark in some embodiments, both in the spatial and transform domains.

It is described above how a hacker may know that, for example, 16x16 blocks are being watermarked. A further measure, which can be used to improve security, is to change the origin of each block. Referring back to Figure 1, the block 1 has its origin, i.e. start point at pixel $O_0$. The first block would then normally be the top left-most block of the image, for example. In an origin changing technique, the origin from which each block is then subsequently measured is offset. For example, pixel $O_1$ may be used as the origin. This will offset the block by one pixel. The hacker than needs to know not only the size of the blocks but also the origin point of each block and again this improves security. Clearly, the information regarding the offset of the origin will need to be given to the receiver but this could again be done by a key system.

The techniques outlined above are very efficient at improving the confidence in watermarked images. However, watermarks are often themselves distorted and/or may become impossible to recover when an image undergoes some sorts of legitimate processing such a JPEG compression and decompression.

The confidence measure of the present invention may be used to detect tampering if it is examined over each block in the image. In order to do this, the confidence measure for bit n in a given block is compared with the measure for bit n of the watermark in all other blocks of the values. Anomalous values can be evidence of tampering. However, the confidence measure itself may be subject to variation within a block due to the impact of JPEG processing. JPEG processing is achieved, as is known, by quantisation of the DCT (Discrete Cosine Transform) coefficients of an image, which thus impact the phase. The DCT blocks in JPEG are of 8 x 8 pixels and so there are four 8 x 8 blocks in a 16 x 16 block. JPEG quantisation is not constant throughout each 8 x 8 pixel block but is defined according to a quantisation table. Quantisation becomes increasingly coarse as the coefficients go up in frequency since the eye is less sensitive to high frequency components.

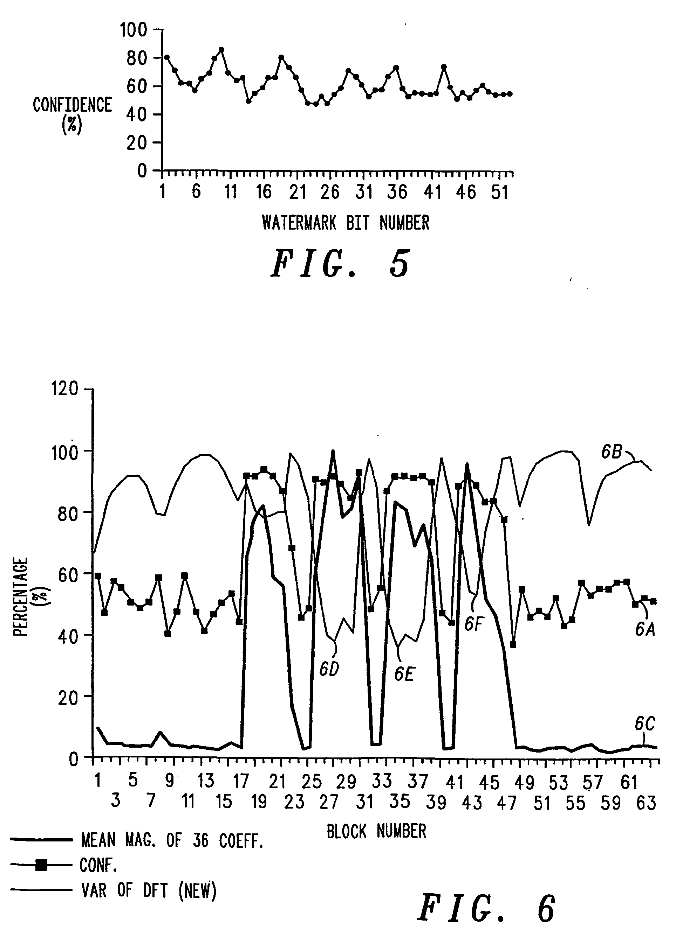

An example of the impact of JPEG processing on a 52 bit watermark is shown in Figure 5 where the confidence level as a percentage is plotted against the watermark bit number. It is seen from the figure that the confidence measure varies within the watermark depending upon the position of the bit. A cyclic pattern is noted having approximately regular peaks and troughs whose periodicity depends on the relationship between the embedding pattern (and the block size used for watermarking) and the JPEG quantisation which is based on 8 x 8 pixel blocks.

In modifications of the invention, a simple method to improve the confidence of recovery of the watermark without destroying its fragility (which is essential for tamper evidence) is to shuffle the embedding of the mark in each block. This may be done in one embodiment by repeating the watermark in each block but rotated one bit at a time, as shown in the following Table 1.

**Table 1**

| Block | Start bit | | | | | End bit |
|---|---|---|---|---|---|---|
| 0 | 0 | 1 | 2 | ....... | 50 | 51 |
| 1 | 1 | 2 | 3 | ....... | 51 | 0 |
| ... | | | | | | |
| 99 | 47 | 48 | 49 | ....... | 45 | 46 |

It will be appreciated that many other methods of shuffling may be used. The watermark may be rotated by more than one bit at a time, it may be shuffled between blocks in a pseudo random manner or by many other patterns and schemes as will be appreciated.

The effect of this rotation or shuffling is that the overall confidence of recovery of the watermark is now consistent on the average (i.e. taking all watermarked blocks within the image) for each of the 52 bits. In addition, the essential property that confidence for a given bit position within a 16 x 16 block can be examined with reference to the complete image has been preserved and thus the watermark can be made more robust (that is more reliably detected) without affecting its tamper evident properties.

It should be noted that the above method does not depend on any particular periodicity in the confidence measure with respect to watermark bit number as this may change if the watermark bits are reordered within the image block in which they are embedded.

Again, the modification as shown with reference to Table 1 is equally applicable in both spatial and transformed domain watermark systems. It is particularly applicable where the original image and/or original watermark may not be available at the receiver when detection of the watermark takes place.

Watermarking in itself can have a visible effect on the image. It is important to choose carefully those parts (i.e. blocks) of the image which are to be watermarked. If the watermark is too visible, then it is easy for a hacker to reproduce the watermark. Accordingly, in order to be successful, a watermarking and confidence measuring scheme requires blocks to be watermarked which can have a high confidence measure and also low visibility.

It is generally prudent not to watermark areas of an image which are of low texture.

For watermarking schemes in the frequency transform domain in particular, but also for use in the spatial domain, the inventors have found that interesting information can be obtained by a study of the variance of the magnitude of the digital Fourier transform. Figure 6 shows three plots. A first plot 6a is of the confidence level for some of the blocks in a particular image. The confidence measurements are shown as squares and these are joined together to form a plot. Overlaid upon this is a further plot 6b which shows the variance of the magnitude of the DFT coefficients of each block. An additional plot 6c shows the mean magnitude of the DFT coefficients of the blocks which were selected for watermarking with respect to the mean magnitude of all the DFT coefficients of the block.

The variance levels of Figure 6b are taken as percentages relevant to the figure having the highest variance, which is considered to be 100%.

It is seen that the highest confidence levels are generally obtained for those parts having lower variance (e.g. blocks 6d, 6e, 6f). Accordingly, for the best results, it is preferable to choose to watermark those parts of the image which have a relatively low variance. In some embodiment this may be, for example, those parts of the image which have a variance of less than about 50%. If a block has a variance of less than 50% then this is considered to be a good candidate for watermarking since this block will then have low visibility and high confidence.

It is found that patterns similar to that of Figure 6 are obtained with most images.

Table 2 below shows the effects of watermarking three different images, respectively called "house", "rose" and "beans", and of watermarking those parts of the image which have a variance in magnitude ofDFT of less than 50%. The overall confidence varies from 75.5 to 89.78% and the visibility of the watermarks is good (i.e. this means that the watermarks are not particularly visible).

**Table 2**

| Test Image | No. of blocks w/ marked | Overall BER (%) | Overall Confidence (%) | Avg. PSNR (dB) | Visibility of w/ mark |
|---|---|---|---|---|---|
| House | 35 | 3.81 | 80.2 | 83.23 | Good |
| Rose | 60 | 6.99 | 75.5 | 78.5 | Good |
| Beans | 9 | 0.31 | 89.78 | 87.5 | Good |

In each of the images, a total of 64 blocks were available to watermark and only some of these were chosen to be watermarked, depending upon whether they had the correct variance.

Table 3 below indicates the results of a second scheme for the same three images in which a block was watermarked if the mean magnitude of the 36 DFT coefficients which were chosen for watermarking was greater than 40% (that is 40% of the total mean magnitude for the DFT block). It is seen that although the confidence overall is increased, the visibility of the watermarks is not as good as for those chosen only when the variance is less than 50%.

**Table 3**

| Test Image | No. of blocks w/ marked | Overall BER (%) | Overall Confidence (%) | Avg. PSNR (dB) | Visibility of w/ mark |
|---|---|---|---|---|---|
| House | 29 | 0.57 | 88.1 | 83.16 | Not as Good as A |
| Rose | 33 | 3.68 | 80.1 | 75.0 | As Good as A |
| Beans | 22 | 0.25 | 89.82 | 84.4 | Not as Good as A |

Table 4 below indicates a scheme in which a block was chosen to be watermarked only if both the conditions of Table 2 and 3 were satisfied, that is if the variance of the magnitude of the DFT was less than 50% with respect to peak variance and the mean magnitude of 36 coefficients chosen to watermark was greater than 40% of the total mean magnitude.

**Table 4**

| Test Image | No. of blocks w/ marked | Overall BER (%) | Overall Confidence (%) | Avg. PSNR (dB) | Visibility of w/ mark |
|---|---|---|---|---|---|
| House | 17 | 0.49 | 88.6 | 85.3 | As Good as A |
| Rose | 30 | 3.85 | 81.1 | 79.5 | A is slightly better |
| Beans | 9 | 0.31 | 89.8 | 87.5 | As Good as A |

It is seen that the overall confidence levels are high and also that the visibility of the watermarks is good.

Note that only a small number of blocks met the requirements for this table. By using origin offsetting it may be possible to change the origin so that more blocks are suitable, and thereby maximise the number of blocks which have the preferred characteristics for watermarking.

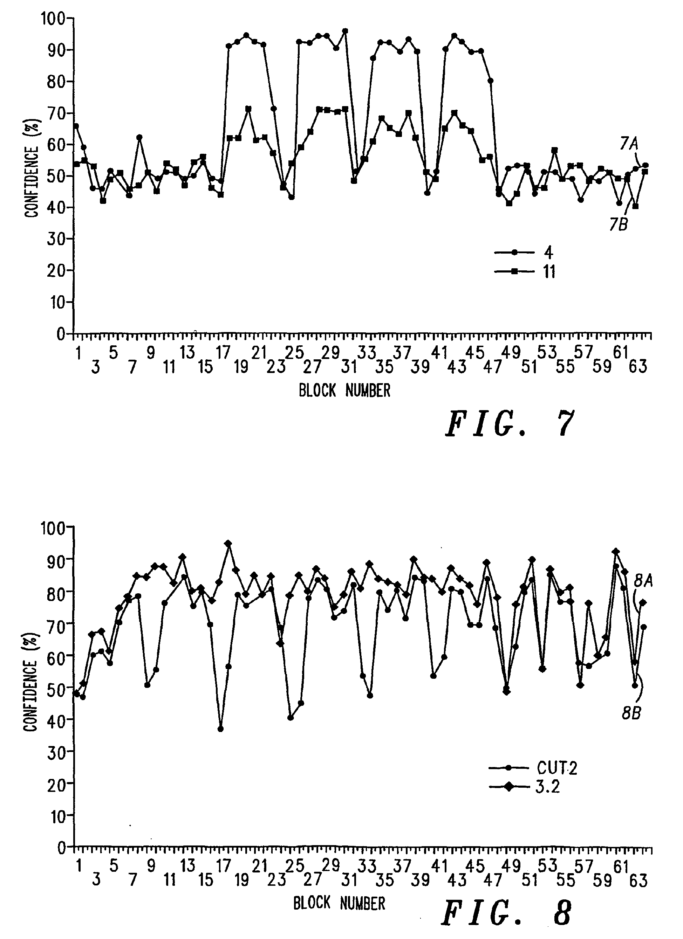

Referring back to watermarking images which are then subject to JPEG compression, Figure 7 shows two plots 7a and 7b of varying degrees of JPEG compression. 7a shows the confidence in blocks which have been subject to a 4:1 compression whereas block 7b shows ones which have been subject to an 11:1 compression. As shown, the peaks and troughs in the confidence measure are generally in line, but the greater compression tends to reduce the amplitudes of the peaks and troughs. Thus, confidence measures can work over a great variation of images and image compression techniques. Confidence values change in predictable ways for legitimate processing.

Figure 8 shows the changes in confidence level which occurred when an image was deliberately tampered with, in this case by cutting and pasting certain blocks and parts of the image. Plot 8a indicates the confidence levels per block and plot 8b shows which blocks were tampered with by cutting and pasting. A correlation is observed and the user can determine that the image may have been tampered and may therefore be unreliable as evidence

## Claims

1.  A tamper detection method for digital images, comprising providing a digitally watermarked image, and digitally processing at least some watermarked parts of the image, the method being **characterised in that** the digitally processing step comprises determining confidence values (5, 6a) for the at least some watermarked parts of the image, a confidence value representing the likelihood that a watermarked part has been tampered with and comparing the determined confidence values across the provided image to provide an indication as to the likelihood that the provided image has been tampered with.

2.  A method as claimed in Claim 1, wherein the confidence value $C_n$ of a bit n of the provided image is related to the proximity of a recovered value of bit n, recovered from the provided image, to either of the two expected values.

3.  A method as claimed in Claim 1 or 2, wherein the digital watermarking is done on blocks of the image of a predetermined size, wherein a discrete Fourier transform (DFT) is applied to the image on a block by block basis to generate a plurality of DFT coefficients, and a watermark is applied to each one of a selected number of DFT coefficients within a block by selecting the phase of that DFT coefficient ($P_n$) to be equal to the phase of one or other of a plurality of phase values ($P_1$, $P_2$), of a set of quantised phase values, which are closest to the actual phase, dependent upon the value with which the watermarked bit is to be embedded, and wherein during recovery of the watermark, a discrete Fourier transform is again taken of each block and the watermark is recovered by determining which of the quantised set of levels ($P_1$) the recovered bit phase data is closest to, wherein each confidence value (6a) is related to the proximity of the recovered phase to one or more of the quantised set of phase levels.

4.  A method as claim in Claim 3, wherein a confidence value for each bit n of recovered phase $P_n$ is defined as

$$C_n = 1 - (2 * | P_x - P_n | / | P_x - P_y | )$$

where $P_n$ is the recovered phase for bit n of the watermark, $||$ denotes modulus, and $P_x$, $P_y$ are the nearest reference phase levels, where $P_x$ was chosen as the closest.

5.  A method as claimed in Claim 1 or 2, wherein the digital watermarking is done on blocks of the image of a predetermined size; wherein an amplitude value is added to, or subtracted from, an amplitude relating to each one of a number of selected pixels of the block, depending upon whether the value with which the watermarked bit is to be embedded, and wherein during recovery of the watermark, an estimate of the actual value is made, and wherein each confidence value is related to the proximity of the recovered amplitude to one or more of a quantised set of reference amplitude levels.

6. A method as claimed in Claim 5, wherein a confidence value for each bit is of recovered amplitude An is defined as:

$$C_n = 1 - (2 * | A_x - A_n | / | A_x - A_y| )$$

where $A_n$ is the recovered amplitude for bit n of the watermark, $\|$ denotes modules, and $A_x$, $A_y$ are the nearest reference amplitude levels, where $A_x$ was chosen as the closest.

7. A method as claimed in any preceding claim, in which the image is watermarked in blocks of predetermined size and wherein a confidence value $C_n$ is measured for bit n in each block and the confidence measures for bit n across the whole image are then compared to determine the likelihood of tampering.

8. A method as claimed in any preceding claim, in which the image is watermarked in blocks of predetermined size, and wherein the confidence per block is measured as an average across the whole watermark and is compared with the average confidence value in each of the other blocks throughout the image, to determine the likelihood of tampering.

9. A method as claimed in any preceding claim, wherein only a selection of blocks of predetermined size of the image are watermarked.

10. A method as claimed in any preceding claim, wherein the image is watermarked in blocks of predetermined size and wherein the origin of the blocks is offset.

11. A method as claimed in Claim 10, wherein origin offsetting is used to maximise the number of blocks suitable for watermarking.

12. A method as claimed in any preceding claim, wherein the image is watermarked in blocks of a predetermined size and wherein the embedding of the watermark is shuffled from block to block.

13. A method as claimed in Claim 12, wherein the shuffling comprises rotating the bits of the watermark from one block to the next according to predetermined rules, in particular wherein the shuffling comprises a pseudo-random shuffling from one block to the next.

14. A method as claimed in any preceding claim, wherein the watermarking process includes a discrete Fourier transform step and wherein the parts of the image chosen for watermarking are those having a selected DFT magnitude variance (6b).

15. A method as claimed in Claim 14, wherein the areas chosen are those having a variance in the magnitude of the discrete Fourier transform coefficients of less than about 50% with respect to the peak variance of the DFT magnitude.

16. A method as claimed in one of Claims 14 or 15, wherein the areas chosen are those whose mean magnitude of the DFT coefficients chosen for watermarking is greater than about 40% of the total mean magnitude for the whole block (6c).

17. A method as claimed in any preceding claim, wherein the image is watermarked in blocks and wherein a bit error rate measurement of the recovered watermark per block, with respect to the original watermark, is used in combination with the confidence values to determine the likelihood of tampering.

**Patentansprüche**

1. Verfahren zur Manipulationserkennung für digitale Bilder, welches die Bereitstellung eines digital mit einem Wasserzeichen versehenen Bildes aufweist, sowie die digitale Bearbeitung mindestens einiger mit Wasserzeichen versehener Abschnitte des Bildes, wobei das Verfahren **dadurch gekennzeichnet ist, dass** der digitale Bearbeitungsschritt die Bestimmung von Vertrauenswerten (5, 6a) für die mindestens einigen mit Wasserzeichen versehenen Abschnitte des Bildes aufweist, wobei ein Vertrauenswert die Wahrscheinlichkeit darstellt, dass ein mit Wasserzeichen versehener Abschnitt manipuliert worden ist, und Vergleichen des bestimmten Vertrauenswerts an dem bereitgestellten Bild zur Bereitstellung einer Angabe bezüglich der Wahrscheinlichkeit, dass das bereitgestellte Bild manipuliert worden ist.

2. Verfahren nach Anspruch 1, **dadurch gekennzeichnet, dass** der Vertrauenswert Cn eines Bits n des bereitgestellten Bildes mit der Nähe eines wiederhergestellten Wertes von Bit n zu einem der beiden erwarteten Werte in Zusammenhang steht, wobei der wiederhergestellte Wert aus dem bereitgestellten Bild wiederhergestellt wird.

3. Verfahren nach Anspruch 1 oder 2, **dadurch gekennzeichnet, dass** die digitale Wasserzeichenmarkierung auf Blöcken des Bildes einer vorher festgelegten Größe erfolgt, wobei eine diskrete Fourier-Transformation (DFT) bei dem Bild auf einer Block-für-Block-Basis zur Erzeugung einer Vielzahl von DFT-Koeffizienten angewendet wird, und ein Wasserzeichen auf jeden aus einer ausgewählten Anzahl von DFT-Koeffizienten innerhalb eines Blocks aufgebracht wird, indem die Phase desjenigen DFT-Koeffizienten ($P_n$) so gewählt wird, dass sie identisch ist zur Phase des einen oder anderen aus einer Vielzahl von Phasenwerten ($P_1$, $P_2$) einer Gruppe quantisierter Phasenwerte, welche der tatsächlichen Phase am nächsten sind, abhängig von dem Wert, mit welchem das mit Wasserzeichen versehene Bit eingelagert bzw. eingebaut werden soll, und wobei während der Wiederherstellung des Wasserzeichens erneut eine diskrete Fourier-Transformation eines jeden Blocks erfolgt und das Wasserzeichen wiederhergestellt wird, indem bestimmt wird, welcher quantisierter Gruppe von Pegeln ($P_1$) die wiederhergestellten Bit-Phasendaten am nächsten sind, wobei jeder Vertrauenswert (6a) mit der Nähe der wiederhergestellten Phase zu einem oder mehreren der quantisierten Gruppe von Phasenpegeln in Zusammenhang steht.

4. Verfahren nach Anspruch 3, **dadurch gekennzeichnet, dass** ein Vertrauenswert für jedes Bit n einer wiederhergestellten Phase $P_n$ folgendermaßen definiert ist:

$$C_n = 1 - (2 \ast \mid P_x - P_n \mid / \mid P_x - P_y \mid)$$

wobei $P_n$ die wiederhergestellte Phase für das Bit n des Wasserzeichens ist, $\parallel$ den Modul bezeichnet, und $P_x$, $P_y$ die nächstliegenden Referenzphasenpegel sind, wobei $P_x$ als am nächsten gewählt wurde.

5. Verfahren nach Anspruch 1 oder 2, **dadurch gekennzeichnet, dass** die digitale Wasserzeichenmarkierung auf Blöcken bzw. Feldern des Bildes festgelegter Größe erfolgt; wobei ein Amplitudenwert zu einer zu jedem einer Anzahl ausgewählter Pixel des Blocks zugehörigen Amplitude addiert wird, oder von dieser subtrahiert wird, abhängig von dem Wert, mit welchem das mit Wasserzeichen versehene Bit eingelagert bzw. eingebaut werden soll, und wobei während der Wiederherstellung des Wasserzeichens eine Schätzung des tatsächlichen Wertes erfolgt, und wobei jeder Vertrauenswert mit der Nähe der wiederhergestellten Amplitude zu einem oder mehreren aus einer quantisierten Gruppe von Referenz-Amplitudenpegeln in Zusammenhang steht.

6. Verfahren nach Anspruch 5, **dadurch gekennzeichnet, dass** ein Vertrauenswert für jedes Bit einer wiederhergestellten Amplitude An folgendermaßen definiert ist:

$$C_n = 1 - (2 \ast \mid A_x - A_n \mid / \mid A_x - A_y \mid)$$

wobei $A_n$ die wiederhergestellte Amplitude für Bit n des Wasserzeichens ist, $\parallel$ Module bezeichnet, und $A_x$, $A_y$ die nächstliegenden Referenz-Amplitudenpegel sind, wobei $A_x$ als am nächsten gewählt wurde.

7. Verfahren nach einem der vorhergehenden Ansprüche, in welchem das Bild in Blöcken vorher festgelegter Größe mit Wasserzeichen versehen wird, und **dadurch gekennzeichnet ist, dass** ein Vertrauenswert $C_n$ für Bit n in jedem Block gemessen wird und die Vertrauens-Größenwerte für Bit n quer über das ganze Bild dann zur Bestimmung der Wahrscheinlichkeit einer Manipulation verglichen werden.

8. Verfahren nach einem der vorhergehenden Ansprüche, in welchem das Bild in Blöcken vorher festgelegter Größe mit Wasserzeichen versehen wird, und **dadurch gekennzeichnet ist, dass** das Vertrauen pro Block als Durchschnittswert quer über das gesamte Wasserzeichen gemessen wird und mit dem durchschnittlichen Vertrauenswert in jedem der anderen Blöcke über das gesamte Bild verglichen wird, um die Wahrscheinlichkeit einer Manipulation zu bestimmen.

9. Verfahren nach einem der vorhergehenden Ansprüche, **dadurch gekennzeichnet, dass** lediglich eine Auswahl von Blöcken vorher festgelegter Größe des Bildes mit Wasserzeichen versehen wird.

10. Verfahren nach einem der vorhergehenden Ansprüche, **dadurch gekennzeichnet, dass** das Bild in Blöcken vorher festgelegter Größe mit Wasserzeichen versehen wird und dass der Anfang der Blöcke versetzt ist.

11. Verfahren nach Anspruch 10, **dadurch gekennzeichnet, dass** ein Versatz der Blockanfänge verwendet wird, um die Anzahl der für die Wasserzeichenmarkierung geeigneten Blöcke zu maximieren.

12. Verfahren nach einem der vorhergehenden Ansprüche, **dadurch gekennzeichnet, dass** das Bild in Blöcken vorher festgelegter Größe mit Wasserzeichen versehen wird, und dass die Einlagerung bzw. der Einbau des Wasserzeichens von Block zu Block verlagert wird.

13. Verfahren nach Anspruch 12, **dadurch gekennzeichnet, dass** die Verlagerung das Drehen der Bits des Wasserzeichens von einem Block zum nächsten Block entsprechend vorher festgelegter Regeln aufweist, insbesondere dass die Verlagerung eine pseudo-zufällige Verlagerung von einem Block zum nächsten Block aufweist.

14. Verfahren nach einem der vorhergehenden Ansprüche, **dadurch gekennzeichnet, dass** der Wasserzeichen-Markierungsprozess einen diskreten Fourier-Transformationsschritt einschließt, und dass die Abschnitte des für eine Wasserzeichenmarkierung gewählten Bildes diejenigen Abschnitte sind, welche eine gewählte DFT-Größenvarianz (6b) aufweisen.

15. Verfahren nach Anspruch 14, **dadurch gekennzeichnet, dass** die gewählten Bereiche solche Bereiche sind, welche eine Varianz in der Größenordnung der diskreten Fourier-Transformationskoeffizienten von weninger als ungefähr 50% mit Bezug auf die Höchst- bzw. Spitzenvarianz der DFT-Größenordnung aufweisen.

16. Verfahren nach einem der Ansprüche 14 oder 15, **dadurch gekennzeichnet, dass** die gewählten Bereiche diejenigen Bereiche sind, deren Durchschnittsgröße der für eine Wasserzeichenmarkierung ausgewählten DFT-Koeffizienten größer als ungefähr 40% der Gesamtdurchschnittsgröße für den gesamten Block (6c) ist.

17. Verfahren nach einem der vorhergehenden Ansprüche, **dadurch gekennzeichnet, dass** das Bild in Blöcken mit Wasserzeichen versehen wird, und dass eine Bitfehlerrate-Messung des wiederhergestellten Wasserzeichens pro Block, mit Bezug auf das ursprüngliche Wasserzeichen, in Kombination mit den Vertrauenswerten zur Bestimmung der Wahrscheinlichkeit einer Manipulation verwendet wird.

## Revendications

1. Procédé de détection de sabotage pour des images numériques, comprenant la réalisation d'une image numériquement filigranée, et le traitement numérique d'au moins quelques parties filigranées de l'image, le procédé étant **caractérisé en ce que** l'étape de traitement numérique comprend la détermination de valeurs de confidence (5, 6a) pour les au moins quelques parties filigranées de l'image, une valeur de confidence représentant la probabilité qu'une partie filigranée a été sabotée avec et comparée avec les valeurs de confidence déterminées sur l'image réalisée pour fournir une indication quant à la probabilité que l'image fournie a été sabotée.

2. Procédé selon la revendication 1, dans lequel la valeur de confidence Cn d'un binaire n de l'image fournie est liée à la proximité d'une valeur récupérée de binaire n, récupérée de l'image fournie, à l'une quelconque des deux valeurs attendues.

**3.** Procédé selon la revendication 1 ou 2, dans lequel le filigranage numérique est exécuté sur des blocs de l'image d'une taille prédéterminée, où une transformation discrète de Fourier (DFT) est appliquée à l'image sur une base de bloc par bloc pour produire une pluralité de coefficients DFT, et un filigrane est appliqué à chacun d'un nombre sélectionné de coefficients DFT dans un bloc en sélectionnant la phase de ce coefficient DFT ($P_n$) pour qu'elle soit égale à la phase d'une ou de l'autre d'une pluralité de valeurs de phase ($P_1$, $P_2$), d'un ensemble de valeurs de phase quantifiées, qui sont les plus proches de la phase actuelle, en fonction de la valeur avec laquelle le binaire filigrané doit être noyée, et où durant la récupération du filigrane, une transformation discrète de Fourier est à nouveau effectuée sur chaque bloc, et le filigrane est récupéré en déterminant celui parmi l'ensemble de niveaux quantifiés ($P_1$) qui est le plus proche des données de phase de binaire récupéré, où chaque valeur de confidence (6a) est liée à la proximité de la phase récupérée à un ou plusieurs de l'ensemble de niveaux de phase quantifiés.

**4.** Procédé selon la revendication 3, dans lequel une valeur de confidence pour chaque binaire (n) de phase récupérée ($P_n$) est définie comme

$$\text{Cn} = 1 - (2 * | P_x - P_n | / | P_x - P_y | )$$

où $P_n$ est la phase récupérée pour le binaire n du filigrane, $\|$ indique un module, et $P_x$, $P_y$ sont les niveaux de phase de référence les plus proches, où $P_x$ a été sélectionné comme le plus proche.

**5.** Procédé selon la revendication 1 ou 2, dans lequel le filigranage numérique est exécuté sur des blocs de l'image d'une taille prédéterminée; où une valeur d'amplitude est ajoutée à, ou soustraite d'une amplitude liée à chacun d'un nombre de pixels sélectionnés du bloc, en fonction de ce que la valeur avec laquelle le binaire filigrané doit être noyé, et où durant la récupération du filigrane, une estimation de la valeur actuelle est effectuée, et où chaque valeur de confidence est liée à la proximité de l'amplitude récupérée à un ou plusieurs d'un ensemble quantifié de niveaux d'amplitude de référence.

**6.** Procédé selon la revendication 5, dans lequel une valeur de confidence pour chaque binaire est d'une amplitude récupérée $A_n$ est définie comme:

$$\text{Cn} = 1 - (2 * | A_x - A_n | / | A_x - A_y | )$$

où $A_n$ est l'amplitude récupérée pour le binaire n du filigrane, $\|$ indique des modules, et $A_x$, $A_y$ sont les niveaux d'amplitude de référence les plus proches, où $A_x$ a été sélectionné comme étant le plus proche.

**7.** Procédé selon l'une quelconque des revendications précédentes, dans lequel l'image est filigranée dans des blocs d'une taille prédéterminée, et où la valeur de confidence Cn est mesurée pour le binaire n dans chaque bloc, et les mesures de confidence pour le binaire n sur toute l'image sont ensuite comparées pour déterminer la probabilité du sabotage.

**8.** Procédé selon l'une quelconque des revendications précédentes, dans lequel l'image est filigranée dans des blocs d'une taille prédéterminée, et où la confidence par bloc est mesurée comme une moyenne sur tout le filigrane et est comparée avec la valeur de confidence moyenne dans chacun des autres blocs dans toute l'image, pour déterminer la probabilité d'un sabotage.

**9.** Procédé selon l'une quelconque des revendications précédentes, dans lequel seulement une sélection de blocs d'une taille prédéterminée de l'image sont filigranées.

**10.** Procédé selon l'une quelconque des revendications précédentes, dans lequel l'image est filigranée dans des blocs d'une taille prédéterminée, et dans lequel l'origine des blocs est décalée.

**11.** Procédé selon la revendication 10, dans lequel un décalage d'origine est utilisé pour amener au maximum le nombre de blocs qui conviennent au filigranage.

**12.** Procédé selon l'une quelconque des revendications précédentes, dans lequel l'image est filigranée dans des blocs d'une taille prédéterminée, et dans lequel le noyage du filigrane est déplacé de bloc en bloc.

13. Procédé selon la revendication 12, dans lequel le déplacement comprend la rotation des binaires du filigrane d'un bloc au suivant selon des règles prédéterminées, en particulier où le déplacement comprend un déplacement pseudo-aléatoire d'un bloc au suivant.

14. Procédé selon l'une quelconque des revendications précédentes, dans lequel le processus de filigranage comprend une étape de transformation de Fourier discrète, et où les parties de l'image sélectionnée pour le filigranage sont celles ayant une variance de grandeur DFT sélectionnée (6b).

15. Procédé selon la revendication 14, dans lequel les zones sélectionnées sont celles ayant une variance dans la grandeur des coefficients de transformation de Fourier discrète inférieure à environ 50% par rapport à la variance de crête de la grandeur DFT.

16. Procédé selon l'une quelconque des revendications 14 ou 15, dans lequel les zones sélectionnées sont celles dont la grandeur moyenne des coefficients DFT sélectionnés pour le filigrane est plus grande qu'environ 40% de la grandeur moyenne totale de l'ensemble du bloc (6c).

17. Procédé selon l'une quelconque des revendications précédentes, dans lequel l'image est filigranée dans des blocs, et dans lequel une mesure de taux d'erreur de binaire du filigrane récupéré par blocs, par rapport au filigrane initial, est utilisée en combinaison avec les valeurs de confidence pour déterminer la probabilité d'un sabotage.

FIG. 1

FIG. 3

FIG. 2

FIG. 4

FIG. 5

——— MEAN MAG. OF 36 COEFF.
—■— CONF.
——— VAR OF DFT (NEW)

FIG. 6

*FIG. 7*

*FIG. 8*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Dowling ; Boland.** Phase Watermarking of Digital Images. *IEEE INTCONF Image Processing,* September 1996, vol. 3, 239, 242

- **Deepa Kundur ; Dimitrios Hatzinakos.** Attack Characterization for Effective Watermarking. *International Conference on Image Processing, ICIP'99,* 24 October 1999, 240-244